# EUROPÄISCHE PATENTSCHRIFT

(11) **EP 0 690 969 B1**
(45) Veröffentlichungstag und Bekanntmachung des Hinweises auf die Patenterteilung: **29.07.1998**
(21) Anmeldenummer: 94911081.1
(22) Anmeldetag: 26.03.1994
(51) Int. Cl.: F24D 3/16, F28D 1/02

(54) **DECKENSTRAHLPLATTENEINRICHTUNG**
CEILING RADIANT PANEL DEVICE
DISPOSITIF DE PLAQUES A RAYONNEMENT POUR PLAFOND

(30) Priorität: 01.04.1993 DE 4310686; 14.01.1994 DE 9320255 U
(43) Veröffentlichungstag der Anmeldung: 10.01.1996
(73) Patentinhaber: STETTNER, Gottfried, D-74245 Löwenstein (DE)
(72) Erfinder: STETTNER, Gottfried, D-74245 Löwenstein (DE)
(74) Vertreter: Clemens, Gerhard, Dr.-Ing.
(86) Internationale Anmeldenummer: DE9400345
(87) Internationale Veröffentlichungsnummer: WO9423248

(56) Entgegenhaltungen:
- BE-A- 896 664
- DE-B- 1 040 765
- FR-A- 911 074

## Beschreibung

### TECHNISCHES GEBIET

Die vorliegende Erfindung betrifft eine Deckenstrahlplatteneinrichtung nach dem ersten Teil des Anspruchs 1.

Derartige Decken werden vornehmlich zur Beheizung von Großräumen eingesetzt, zum Beispiel in Werk-, Sport-, Ausstellungshallen oder dergleichen. Sie können auch als Strahlungs- und Wärmeschutz oder zur Kühlung in das jeweilige Gebäude eingebaut werden. Die Wärmestrahlung derartiger Deckenstrahlplatten wird erst beim Auftreten auf einen Körper in Wärme-Energie umgesetzt. Deshalb kann die Lufttemperatur niedriger als bei normaler Luftheizung gehalten werden.

### STAND DER TECHNIK

Die bekannten Deckenstrahieinrichtungen bestehen aus langen schmalen Rechteckbändern, innerhalb derer in Längsrichtung verlaufende, beabstandet zueinander angeordnete Heizrohrelemente eines Heizsystems vorhanden sind. Derartige Deckenstrahlplatteneinrichtungen werden im oberen Bereich von Gebäuden angeordnet. Zwar sind derartige Deckenstrahlplattensysteme gegenüber konventionellen Heizsystemen für Großräume energiesparend und komfortabel. Allerdings ist mit den bekannten Deckenstrahlplatteneinrichtungen eine punktuelle Leistungserhöhung und eine Umschichtung interner Raumlasten bei großen Deckenhöhen nicht möglich.

Die FR-A-911 074 beschreibt eine Deckenstrahlplatteneinrichtung eines mit einer Temperatur zu beaufschlagenden Raumes, mit temperaturbeaufschlagten Mitteln, wobei die Temperaturabgabe vornehmlich durch Strahlung von der Unterseite der Deckenstrahlplatteneinrichtung in den mit der Temperatur zu beaufschlagenden Raum erfolgt. Dabei zirkuliert die Heizflüssigkeit in in einer Decke vorhandenen Kanälen. In der Decke oder oberhalb der Decke ist ein Kanalsystem installiert, innerhalb dessen Luft von einer Ventilatoreinrichtung angesaugt und in den Raum geblasen wird. Es wird also dem Raum von außen her Luft zugeführt, die dann in den Raum abgegeben wird.

Die DE-C-1 040 765 zeigt eine Strahlungsheizanlage, bei der oberhalb eines Wärmestrahlkörpers ein Ventilator angeordnet ist. Durch eine relativ komplexe Leitblecheinrichtung wird Luft angesaugt und über zusätzlich vorhandene Kanäle wieder in den Raum abgegeben. Mit einer derartigen Anlage ist es nicht möglich, eine Umschichtung der unter der Decke angesammelten Luft in das Rauminnere in den Aufenthaltsbereich von Personen zu erzielen, so daß der Effekt einer "additiven Heizung" eintritt. Dies ist insbesondere bei Industrieanlagen mit sehr hohen Hallen nicht umsetzbar, da die Einblastiefe der Heizungsanlage dieser Art relativ gering gehalten ist, da ein hohes Blasvolumen innerhalb des Kanalsystems auch zu Störgeräuschen führen würde.

### DARSTELLUNG DER ERFINDUNG

Der vorliegenden Erfindung liegt die Aufgabe zugrunde, eine gegenüber dem genannten Stand der Technik verbesserte Deckenstrahlplatteneinrichtung anzugeben, die eine Leistungssteigerung mit einfachen Mitteln gewährleistet, mittels derer die Temperaturverteilung eines Raums optimal bestimmbar ist, die einen einfachen Aufbau aufweist, variabel den jeweiligen Einsatzverhältnissen anpaßbar ist und einen erhöhten wirtschaftlichen Einsatz gewährleistet und zudem einfach herstellbar und montierbar ist.

Die erfindungsgemäße Deckenstrahlplatteneinrichtung ist durch die Merkmale des Anspruchs 1 gegeben. Vorteilhafte Ausgestaltungen und Weiterbildungen sind Gegenstand der Unteransprüche.

Die erfindungsgemäße Deckenstrahlplatteneinrichtung der eingangs genannten Art zeichnet sich demgemäß dadurch aus, daß auf der Unterseite der Deckenstrahlplatteneinrichtung beabstandet zur Deckenstrahlplatteneinrichtung eine Luftbewegungseinrichtung vorhanden ist, welche zusätzlich zur Strahlungswärme Konvektionswärme entstehen läßt, die dann mittels dieser Luftbewegungseinrichtung auch in den Raum geblasen wird. Hierbei beträgt der Abstand der Luftbewegungseinrichtung zur Unterseite der Deckenstrahlplatteneinrichtung 10 cm bis 30 cm, vorzugsweise 10 bis 20 cm.

Eine bevorzugte Ausgestaltung, die eine optimale Ausnutzung der in den Heiz- beziehungsweise Kühlelementen zirkulierenden Energie gewährleistet, zeichnet sich dadurch aus, daß zumindest eine Luftstromleiteinrichtung vorhanden ist, die zumindest bereichsweise ein Vorbeiströmen der durch die Luftbewegungseinrichtung angesaugten Luftmente an den Heiz- beziehungsweise Kühlelementen bewirkt und durch diese mit vorbeiströmender Luft beaufschlagten Flächen ein erhöhter Wärmeübergang durch Konvektion entsteht, so daß eine Deckenstrahlplatte dadurch eine höhere Wärme- (Kälte-) abgabe erhält. Dabei ist die Luftstromleiteinrichtung so ausgebildet, daß sie möglichst wenig der nach unten abstrahlenden Strahlungsfläche der Deckenstrahlplatteneinrichtung abdeckt. Dadurch wird einerseits die Abgabe der Temperatur durch Strahlung wie bei den bekannten Deckenstrahlplatteneinrichtungen gewährleistet und gleichzeitig wird an die vorbeiströmende Luftmenge mittels Konvektion die in den Kühl- bzw. Heizelementen vorhandene Temperatur abgegeben.

Zum Erzielen optimaler Strömungsverhältnisse weist die Luftstromleiteinrichtung bevorzugt eine Düseneinrichtung auf, die im Bereich der Luftbewegungseinrichtung angeordnet ist.

Eine hinsichtlich ihrer konstruktiven Ausbildung besonders einfach gestaltete Deckenstrahlplatteneinrichtung, die bekannterweise als lange schmale Rechteckplatte ausgebildet ist, zeichnet sich dadurch aus, daß im Bereich der Luftbewegungseinrichtung jeweils auf den Längsseiten der Deckenstrahlplatteneinrichtung auf der Unterseite platten- oder schalenförmige Leitelemente vorhanden sind. Dabei hat es sich als günstig erwiesen, die Luftbewegungseinrichtung mit Düseneinrichtung an der dem zu versorgenden Raum zugewandten Unterseite der Luftstromleiteinrichtung zu befestigen.

Bevorzugt ist die Luftbewegungseinrichtung als Ventilatoreinrichtung ausgebildet, was einen konstruktiv besonders einfachen und dauerhaft funktionsfähigen Aufbau gewährleistet. Hierbei kann eine Regelungseinrichtung zum Einsatz kommen, die zumindest in Abhängigkeit der Einbauhöhe der Deckenstrahlplatteneinrichtung, der Raumtemperatur der unter der Deckenplatteneinrichtung angesaugten Luftmenge oder dergleichen der für die Raumtemperatur bestimmenden Parameter, die durch die Luftbewegungseinrichtung zu bewegende Luftmenge, vorzugsweise über die Drehzahl des Rotors der Ventilatoreinrichtung, regelt.

Nachfolgend wird der Einsatz einer Deckenstrahlplatteneinrichtung mit Heizelementen beschrieben. Erfindungsgemäß können jedoch auch Kühlelemente eingesetzt werden.

Die Kombination eines Deckenstrahlplattenventilators mit einer bekannten Deckenstrahlplatte vereint die Vorzüge des Deckenstrahlplatten- und des Lufterhitzer-Systems, nämlich zum einen eine gleichmäßige Strahlungswärme und zum anderen punktuelle Leistungserhöhung und Umschichtung interner Raumlasten bei großen Deckenhöhen in dem Personen-Aufenthaltsbereich. Durch die erfindungsgemäße Deckenstrahlplatteneinrichtung wird bewirkt, daß eine fast ausschließlich nur Strahlungswärme abgebende Deckenstrahlplatte, durch die an der Unterseite der Deckenstrahlplatte durch die Luftbewegungseinrichtung erzeugte Luftströmung zusätzlich Konvektionswärme entstehen läßt und die Wärmeabgabe dadurch entsprechend vergrößert wird.

Dabei hat es sich in der Praxis gezeigt, daß durch vorgenannte Maßnahme eine ca. 9 m lange Deckenstrahlplatte durch den Anbau einer Ventilatoreinrichtung bzw. eines Lüfters die doppelte Wärmeleistung erhält.

Ergänzend zur vorgenannten Leistungsvergrößerung kann die genannte Kombination als sogenannte "additive Heizung" eingesetzt werden, das heißt, daß eine Umschichtung von unter hohen Hallen durch interne Lasten angestaute Wärme nach unten in den Aufenthaltsbereich von Personen möglich ist, und zwar erst dann, wenn Additierung von "Frischwärme" durch Öffnen des Heizwasserdurchflusses durch die Heizelemente durch die Deckenstrahlplatte erforderlich ist.

Der Anbau eines Deckenstrahlplattenlüfters bzw. einer Ventilatoreinrichtung stellt eine preiswerte Lösung zur Leistungssteigerung von bekannten Deckenstrahlplatten dar. Vorhandene interne Wärmelasten, zum Beispiel in Fabrikhallen, werden nahezu zum Null-Tarif zur Beheizung herangezogen.

Bezeichnend für die erfindungsgemäße Deckenstrahlplatteneinrichtung ist, daß die Deckenstrahlplattenventilatoreinrichtung aufgrund ihrer Wurfweite Warmluft von bis zu 10 m hohen oder höheren Räumen nach unten in die Aufenthaltszone bläst und nicht zur Lüftung herangezogen wird, wie bei einer auf dem Markt befindlichen doppelschaligen Deckenstrahlplatte.

Ein besonderer Vorteil der erfindungsgemäßen Deckenstrahlplatteneinrichtung liegt darin, daß durch entsprechende Plazierung der Deckenstrahlplattenventilatoreinrichtung punktuell eine höhere Wärme erzeugt werden kann, was in vielen Fällen wünschenswert und erforderlich ist.

Ein weiterer Vorteil der erfindungsgemäßen Deckenstrahlplatteneinrichtung ist durch deren Flexibilität gegeben. Die Änderung einer Hallenbelegung und damit einhergehende erforderliche punktuelle Temperaturerhöhungen sind ohne großen Aufwand möglich, wie zum Beispiel auch der Einsatz an Hallentoren zur Abschirmung von Kaltlufteinfall.

Durch den Anbau von verstellbaren Luftleitblechen und/oder Gitter an die Ausblasdüse gemäß einer bevorzugten Ausführungsform, kann der Luftstrom in der Richtung und Form verändert werden. Weiterhin hat es sich als vorteilhaft erwiesen durch das zusätzliche Anordnen einer Filtereinrichtung im Luftstrom die Luft zu reinigen.

Eine besonders bewährte Ausgestaltung der erfindungsgemäßen Deckenstrahlplatteneinrichtung weist eine elektronische Regelung auf, die unter Vorgabe der Einbauhöhe, dem Abfragen der Raumtemperatur im Aufenthaltsbereich und der unter der Deckenstrahlplatte angesaugten Lufttemperatur die Drehzahl des Ventilators und entsprechend die Eindringtiefe des Luftstrahls variiert und Zugfreiheit gewährleistet.

Weitere Ausführungsformen und Vorteile der Erfindung ergeben sich durch die in den Ansprüchen ferner aufgeführten Merkmale sowie durch das nachstehend angegebene Ausführungsbeispiel.

### KURZE BESCHREIBUNG DER ZEICHNUNG

Die Erfindung sowie eine vorteilhafte Ausführungsform derselben wird im folgenden anhand des in der Zeichnung dargestellten Beispiels näher beschrieben und erläutert. Es zeigen:
- Fig. 1: schematische Detail-Untersicht auf eine erfindungsgemäße Deckenstrahlplatteneinrichtung mit einer Ventilatoreinrichtung und einer Luftstromleiteinrichtung,
- Fig. 2: schematische Seitenansicht einer Deckenstrahlplatteneinrichtung gem. Fig. 1,
- Fig. 3: schematischer Querschnitt durch eine Deckenstrahlplatteneinrichtung entlang dem Schnitt A-A gem. Fig.1 und
- Fig. 4: schematischer Querschnitt durch eine Deckenstrahlplatteneinrichtung entlang dem Schnitt B-B gem. Fig.1.

### WEGE ZUM AUSFÜHREN DER ERFINDUNG

Die in den Figuren ausschnittsweise schematisch dargestellte Deckenstrahlplatteneinrichtung 10 weist eine als längliche Rechteckplatte ausgebildete Deckenstrahlplatte 12 mit als Heizrohre ausgebildeten, schematisch dargestellten Heizelementen 14 auf. Die Heizelemente 14 sind auf der Unterseite der Deckenstrahlplatte 12 durchlaufend in einem vorgegebenen seitlichen Abstand zueinander vorhanden und an einen in den Figuren nicht dargestellten Heizkreislauf angeschlossen. An den Seitenrändern 16 der Deckenstrahlplatte 12 sind nach unten überstehende Leitbleche 18 jeweils gegenüberliegend abschnittsweise angeordnet.

Die seitlichen Leitbleche 18 sind Bestandteil einer Luftstromleiteinrichtung 20, die eine auf der Unterseite der Leitbleche 18 angeschlossene Düseneinrichtung 22 aufweist. Die Düseneinrichtung 22 weist in der Untersicht gesehen eine quadratische Außenumfangskontur auf und schließt mit den Leitblechen 18 außenseitig im Seitenrandbereich ab. In der Mitte der Düseneinrichtung 22 ist eine kreisförmige Ausnehmung 24 vorhanden, wobei die schalenförmig ausgebildete Seitenwandung 26 der Düseneinrichtung 22 so ausgebildet ist, daß sie von der äußeren quadratischen Umfangskontur bis hin zur Ausnehmung 24 die beabstandet zur Unterseite der Leitbleche 18 vorhanden ist, verläuft. Im Zentrum der Düseneinrichtung 22 ist innerhalb der Ausnehmung 24 eine Ventilatoreinrichtung 28 angeschlossen, die einen Ventilator mit drei Flügeln 30 aufweist. Die Befestigung der Ventilatoreinrichtung 28 an der Deckenstrahlplatteneinrichtung 10 ist im einzelnen nicht näher dargestellt.

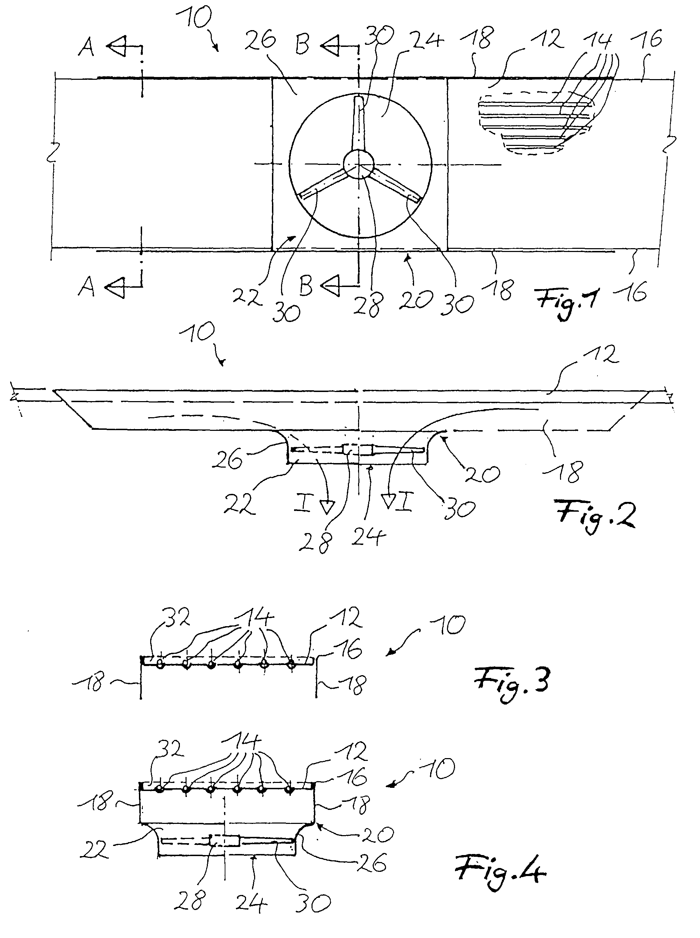

Werden die Flügel 30 der Ventilatoreinrichtung 28 in Rotation versetzt, wird gemäß der Pfeildarstellung in Fig. 2 (Pfeil I) Luft angesaugt, die an den Heizelementen 14 der Deckenstrahlplatteneinrichtung 12 vorbeiströmt und durch die Ausnehmung 24 hindurch unterseitig in den zu beheizenden Raum ausgeworfen wird.

Die Heizelemente 14 sind auf der Deckenstrahlplatte 12 in teilkreisförmigen Sicken verlegt, wobei oberseitig eine Isolierung 32 vorhanden ist.

Die an sich bekannte Deckenstrahlplatte 12 gibt vornehmlich die Wärme über Strahlung in den darunter befindlichen Raum ab. Durch das erfindungsgemäße Anordnen einer Luftbewegungseinrichtung, die beispielhaft als Ventilatoreinrichtung 28 ausgebildet ist, wird zusätzlich die Abgabe von Wärme an die vorbeiströmende Luftmenge mittels Konvektion erzielt. Dadurch läßt sich der wirtschaftliche Einsatz der bekannten Deckenstrahlplatteneinrichtungen deutlich erhöhen, insbesondere können punktuelle oder bereichsweise erforderliche Temperaturgradienten innerhalb des zu beheizenden Raums verwirklicht werden.

## Patentansprüche

1. Deckenstrahlplatteneinrichtung (10), insbesondere angeordnet im oberen Bereich eines mit einer Temperatur zu beaufschlagenden Raumes, mit mit einem Heiz- oder Kühlmedium beaufschlagbaren Heiz- bzw. Kühlelementen (14), wobei die Temperaturabgabe vornehmlich durch Strahlung von der Unterseite der Deckenstrahlplatteneinrichtung (10) in den mit der Temperatur zu beaufschlagenden Raum erfolgt, wobei auf der Unterseite der Deckenstrahlplatteneinrichtung (10) beabstandet zur Deckenstrahlplatteneinrichtung (10) eine Luftbewegungseinrichtung (28) vorhanden ist,
**dadurch gekennzeichnet,** daß die Luftbewegungseinrichtung (28) die im Raum befindliche Luftmenge ansaugt, wodurch die angesaugte Luftmenge an der Unterseite der Deckenstrahlplatteneinrichtung (10) auf die Luftbewegungseinrichtung zu entlangstreicht und die Luftbewegungseinrichtung (28) die angesaugte Luftmenge gezielt von der Decke weg in den Raum bläst, wodurch die Temperatur der Heiz- oder Kühlelemente (14) durch Strahlung und Konvektion an das Rauminnere abgegeben wird.

2. Deckenstrahlplatteneinrichtung nach Anspruch 1,
**dadurch gekennzeichnet,** daß der Abstand der Luftbewegungseinrichtung (28) zur Unterseite der Deckenstrahlplatteneinrichtung (10) 10 cm bis 30 cm, vorzugsweise 10 bis 20 cm, beträgt.

3. Deckenstrahlplatteneinrichtung nach Anspruch 1 oder 2,
**dadurch gekennzeichnet,** daß die Deckenstrahlplatteneinrichtung (10) eine Luftstromleiteinrichtung (20) aufweist, die zumindest bereichsweise ein Vorbeiströmen der durch die Luftbewegungseinrichtung (28) angesaugten Luftmenge an den Heiz- bzw. Kühlelementen (14 ) bewirkt.

4. Deckenstrahlplatteneinrichtung nach Anspruch 3,
**dadurch gekennzeichnet,** daß die Luftstromleiteinrichtung (20) eine Düseneinrichtung (22) aufweist, die im Bereich der Luftbewegungseinrichtung (28) angeordnet ist, wobei die Düseneinrichtung bevorzugt verstellbare Luftleitbleche und/oder Gitter aufweist.

5. Deckenstrahlplatteneinrichtung nach Anspruch 3,
**dadurch gekennzeichnet,** daß die Deckenstrahlplatteneinrichtung (10) als lange schmale Rechteckplatte ausgebildet ist und die Luftstromleiteinrichtung (20) im Bereich der Luftbewegungseinrichtung (28) jeweils auf den Längsseiten der Deckenstrahlplatteneinrichtung (10) auf der Unterseite platten- oder schalenförmige Leitelemente (18) aufweist.

6. Deckenstrahlplatteneinrichtung nach Anspruch 4,
**dadurch gekennzeichnet,** daß die Düseneinrichtung (22) der Luftbewegungseinrichtung (28) unterseitig an der Luftstromleiteinrichtung (20) vorhanden ist.

7. Deckenstrahlplatteneinrichtung nach einem oder mehreren der vorstehend genannten Ansprüche,
**dadurch gekennzeichnet,** daß die Luftbewegungseinrichtung als Ventilatoreinrichtung (28) ausgebildet ist.

8. Deckenstrahlplatteneinrichtung nach einem oder mehreren der vorstehend genannten Ansprüche,
**dadurch gekennzeichnet,** daß eine Regelungseinrichtung vorhanden ist, die zumindest in Abhängigkeit der Einbauhöhe der Deckenstrahlplatteneinrichtung, der Raumtemperatur der unter der Deckenplatte angesaugten Lufttemperatur oder dergleichen der für die Raumtemperatur bestimmenden Parameter, die durch die Luftbewegungseinrichtung zu bewegende Luftmenge regelt.

9. Deckenstrahlplatteneinrichtung nach Anspruch 7 und 8,
**dadurch gekennzeichnet,** daß die Regelung über die Drehzahl des Rotors der Ventilatoreinrichtung erfolgt.

10. Deckenstrahlplatteneinrichtung nach einem oder mehreren der vorstehend genannten Ansprüche,
**dadurch gekennzeichnet,** daß im Bereich der Luftbewegungseinrichtung eine Filtereinrichtung vorhanden ist, die die vorbeiströmende Luft filtert.

## Claims

1. Ceiling radiant panel device (10), in particular arranged in the upper region of a room to be brought to a certain temperature, with heating or cooling elements (14) to which a heating or cooling medium can be applied, the temperature being primarily transmitted by radiation from the underside of the ceiling radiant panel device (10) into the room to be brought to a certain temperature, an air-moving device (28) being present and at a distance from the ceiling radiant panel device (10), characterized in that the air-moving device (28) sucks in the amount of air which is in the room, whereby the amount of air sucked in passes along the underside of the ceiling radiant panel device (10) towards the air-moving device and the air-moving device (28) blows the sucked-in amount of air in a directed manner away from the ceiling into the room, whereby the temperature of the heating or cooling elements (14) is transmitted to the interior of the room by radiation and convection.

2. Ceiling radiant panel device according to Claim 1, characterized in that the distance between the air-moving device (28) and the underside of the ceiling radiant panel device (10) is 10 cm to 30 cm, preferably 10 to 20 cm.

3. Ceiling radiant panel device according to Claim 1 or 2, characterized in that the ceiling radiant panel device (10) has an air-flow deflecting device (20), which at least in certain areas brings about a flowing of the amount of air sucked in by the air-moving device (28) past the heating or cooling elements (14).

4. Ceiling radiant panel device according to Claim 3, characterized in that the air-flow deflecting device (20) has a nozzle device (22), which is arranged in the region of the air-moving device (28), the nozzle device preferably having adjustable air baffles and/or grids.

5. Ceiling radiant panel device according to Claim 3, characterized in that the ceiling radiant panel device (10) is designed as a long narrow rectangular panel and the air-flow deflecting device (20) has on the underside in the region of the air-moving device (28) panel- or shell-shaped deflecting elements (18) respectively on the longitudinal sides of the ceiling radiant panel device (10).

6. Ceiling radiant panel device according to Claim 4, characterized in that the nozzle device (22) of the air-moving device (28) is on the underside of the air-flow deflecting device (20).

7. Ceiling radiant panel device according to one or more of the aforementioned claims, characterized in that the air-moving device is designed as a fan device (28).

8. Ceiling radiant panel device according to one or more of the aforementioned claims, characterized in that there is a control device, which controls the amount of air to be moved by the air-moving device, at least in dependence on the installation height of the ceiling radiant panel device, the room temperature of the amount of air sucked in beneath the ceiling panel or similar parameters determining the room temperature.

9. Ceiling radiant panel device according to Claims 7 and 8, characterized in that the control is performed by means of the speed of the rotor of the fan device.

10. Ceiling radiant panel device according to one or more of the aforementioned claims, characterized in that in the region of the air-moving device there is a filter device, which filters the air flowing past.

## Revendications

1. Dispositif de plaques à rayonnement pour plafond (10), placé notamment dans la partie supérieure d'une pièce à alimenter en température, équipé d'éléments chauffants ou réfrigérants (14) pouvant être alimentés par l'intermédiaire d'un fluide chauffant ou réfrigérant, la conduction de température dans la pièce à alimenter en température s'effectuant surtout par le rayonnement depuis le dessous du dispositif de plaques à rayonnement pour plafond (10), un dispositif de circulation d'air (28) placé à distance du dispositif de plaques à rayonnement pour plafond (10) étant disposé sur le dessous du dispositif de plaques à rayonnement pour plafond (10), **caractérisé en ce que** le dispositif de circulation d'air (28) aspire la quantité d'air se trouvant dans la pièce, la quantité d'air aspiré sur le dessous du dispositif de plaques à rayonnement pour plafond (10) se dirigeant le long du dispositif de circulation d'air, et le dispositif de circulation d'air (28) soufflant la quantité d'air aspiré du plafond vers la pièce de manière précise, la température des éléments chauffants ou réfrigérants (14) étant conduite par rayonnement et convection à l'intérieur de la pièce.

2. Dispositif de plaques à rayonnement pour plafond selon la revendication 1, **caractérisé en ce que** la distance entre le dispositif de circulation d'air (28) et le dessous du dispositif de plaques à rayonnement pour plafond (10) est de 10 à 30 cm, de préférence de 10 à 20 cm.

3. Dispositif de plaques à rayonnement pour plafond selon la revendication 1 ou 2, **caractérisé en ce que** le dispositif de plaques à rayonnement pour plafond (10) présente un dispositif de guidage du courant d'air (20) qui a pour effet, tout du moins dans certaines parties, de faire circuler la quantité d'air aspiré par le dispositif de circulation d'air (28) devant les éléments chauffants ou réfrigérants (14).

4. Dispositif de plaques à rayonnement pour plafond selon la revendication 3, **caractérisé en ce que** le dispositif de guidage du courant d'air (20) présente un dispositif de buses (22) placé dans la partie du dispositif de circulation d'air (28), le dispositif de buses présentant de préférence des déflecteurs d'air réglables et/ou des grilles.

5. Dispositif de plaques à rayonnement pour plafond selon la revendication 3, **caractérisé en ce que** le dispositif de plaques à rayonnement pour plafond (10) est formé comme une plaque rectangulaire longue et étroite et que le dispositif de guidage du courant d'air (20) présente dans la partie du dispositif de circulation d'air (28) des éléments de guidage (18) en forme de plaque ou de coque respectivement sur les côtés longs du dispositif de plaques à rayonnement pour plafond (10) sur le côté inférieur.

6. Dispositif de plaques à rayonnement pour plafond selon la revendication 4, **caractérisé en ce que** le dispositif de buses (22) du dispositif de circulation d'air (28) est disposé sur le dessous du dispositif de guidage du courant d'air (20).

7. Dispositif de plaques à rayonnement pour plafond selon l'une ou plusieurs des revendications précédentes, **caractérisé en ce que** le dispositif de circulation d'air est formé comme un dispositif de ventilation (28).

8. Dispositif de plaques à rayonnement pour plafond selon l'une ou plusieurs des revendications précédentes, **caractérisé en ce qu'**il existe un dispositif de réglage qui règle la quantité d'air à faire circuler dans le dispositif de circulation d'air, tout du moins en fonction de la hauteur d'installation du dispositif de plaques à rayonnement pour plafond, de la température de la pièce de la température de l'air aspiré sous la plaque du plafond ou de paramètres similaires déterminant la température de la pièce.

9. Dispositif de plaques à rayonnement pour plafond selon les revendications 7 et 8, **caractérisé en ce que** le réglage s'effectue par la vitesse de rotation du rotor du dispositif de ventilation.

10. Dispositif de plaques à rayonnement pour plafond selon l'une ou plusieurs des revendications précédentes, **caractérisé en ce qu'**il existe un dispositif de filtrage dans la partie du dispositif de circulation d'air, ce dispositif de filtrage filtrant l'air circulant.
